# EUROPÄISCHE PATENTSCHRIFT

(11) **EP 2 728 232 B1**
(45) Veröffentlichungstag und Bekanntmachung des Hinweises auf die Patenterteilung: **26.08.2015**
(21) Anmeldenummer: 12190653.1
(22) Anmeldetag: 30.10.2012
(51) Int. Cl.: F16L 5/02, E04G 15/06, H02G 3/22

(54) **Durchführung zum Einbau in ein Wand- oder Bodenelement**
Feed-through for installation in a wall or floor element
Passage destiné à l'intégration dans un élément de paroi ou de sol

(43) Veröffentlichungstag der Anmeldung: 07.05.2014
(73) Patentinhaber: Hauff-Technik GmbH & Co. KG, 89568 Hermaringen (DE)
(72) Erfinder: Heck, Martin, 89447 Zöschingen (DE); Kurz, Ralf, 89537 Giengen (DE)
(74) Vertreter: Szynka, Dirk

(56) Entgegenhaltungen:
- EP-A1- 1 120 876
- EP-A1- 2 338 658
- EP-A1- 2 511 580
- DE-U- 1 982 649
- DE-U1-202011 108 274
- GB-A- 2 278 387
- US-A- 3 731 448
- US-B1- 6 386 550

## Beschreibung

Die vorliegende Erfindung betrifft eine zum Einbau in ein Wand- oder Bodenelement vorgesehene Durchführung mit einem Rohrelement, durch welches eine Leitung hindurchführbar ist.

Zu diesem Zweck sind aus dem Stand der Technik beispielsweise sogenannte Schachtfutter mit einem Rohrelement aus Faserzement bekannt, welches nach dem Einbau der Durchführung zwischen zwei Seiten des Wand- oder Bodenelements eine Durchgangsöffnung freihält. Durch diese kann dann eine Leitung geführt und anschließend gegen das Rohrelement gedichtet werden. Jüngere Entwicklungen gehen dahin, die Rohrelemente aus Faserzement durch Rohrelemente aus Kunststoffmaterial zu ersetzen.

Die gattungsbildende US 6,386,550 B1 betrifft eine Durchführung aus Kunststoff, wobei außenseitig an einem Rohrelement Aufhängungselemente zur Befestigung an einer Bewehrung vorgesehen sind. Endseitig in dem Rohrelement, zu dem Aufhängungselement beabstandet ist ein reversibel aus der Durchgangsöffnung entfernbarer Verschlussdeckel zur Abstützung vorgesehen.

Auch die US 3,731,448 A betrifft eine Kunststoff-Durchführung, welche aus einem einstückigen Rohrelement mit endseitigen Aufhängungselementen und einer das Rohrelement verschließenden Trennwand vorgesehen ist. Bei der Durchführung gemäß der GB 2 278 387 A ist in dem Kunststoff-Rohrelement keine durchgehende Trennwand, sondern eine kreuzartige Struktur zur Verstärkung vorgesehen.

Die Durchführung gemäß der DE 1 982 649 U ist aus einem als Meterware angelieferten Rohr aufgebaut, welches vor Ort auf der Baustelle abgelängt und vor dem Einbetonieren mit einer eingeschobenen Versteifungsscheibe stabilisiert wird.

Die EP 2 511 580 A1 betrifft eine Durchführung mit einem für sich einstückigen Rohrelement, wobei ein außenseitig daran vorgesehenes Aufhängungselement gemeinsam mit einer innenseitig vorgesehenen Trennwand in einer zur axialen Richtung senkrechten Ebene liegt.

Der vorliegenden Erfindung liegt die Aufgabe zugrunde, eine Durchführung mit verbesserten Gebrauchseigenschaften anzugeben.

Erfindungsgemäß löst diese Aufgabe eine Durchführung gemäß dem Hauptanspruch.

Das Rohrelement aus Kunststoffmaterial wird also erfindungsgemäß mechanisch verstärkt. Die Erfinder haben nämlich festgestellt, dass selbst im Falle eines an sich im Wesentlichen verformungsarm auf eine Krafteinleitung reagierenden Kunststoffmaterials, zum Beispiel aus/mit Acryl-Butadien-Styrol, die beim Einbau der Durchführung auf das Rohrelement wirkenden mechanischen Kräfte auch so groß werden können, dass das Rohrelement verformt wird. Eine solche Verformung ist dabei nicht nur aus optischen Gründen bzw. erst dann nachteilig, wenn aufgrund des Verformungsgrads die Leitung nicht mehr problemlos hindurchgeführt werden kann; vielmehr haben die Erfinder festgestellt, dass auch schon eine eher geringe Verformung des Rohrelements die Funktionalität der Durchführung beeinträchtigen kann, wenn nämlich beispielsweise außenseitig des Rohrelements ein zu dem Wand- oder Bodenelement hin dichtendes Dichtungselement vorgesehen ist.

Ein solches Dichtungselement kann beispielsweise als dann formschlüssig von dem Material des Wand- oder Bodenelements umschlossener, sich außenseitig von dem Rohrelement weg erhebender Steg vorgesehen sein, der im Falle einer Deformation des Rohrelements auch verformt werden und gegebenenfalls nicht mehr sicher umschlossen, also zu dem Material des Wand- oder Bodenelements ein Stück weit beabstandet sein kann. Im Falle eines Spalts zwischen Rohrelement bzw. Dichtung und Wand- oder Bodenelement ist die Gefahr, dass sich ein das Wand- oder Bodenelement auch vollständig durchsetzender Kriechpfad für Feuchtigkeit bildet, zumindest erhöht; schlimmstenfalls kann zum Beispiel Feuchtigkeit, insbesondere drückendes Wasser, in ein Gebäude eindringen.

An dem Rohrelement ist ein Aufhängungselement zur Montage der Durchführung vorgesehen, welches die Durchführung beim Einbau in das Wand- oder Bodenelement mit in Position hält; das Aufhängungselement kann also beispielsweise an einer Schalung und/oder einer anderen Durchführung, insbesondere an dem Aufhängungselement einer anderen Durchführung, befestigt werden. Nach dem Einbau der Durchführung muss diese Befestigung nicht notwendigerweise bestehen bleiben, weil ja beispielsweise eine Schalung üblicherweise wieder entfernt und die Durchführung dann beispielsweise von dem Material des Wand- oder Bodenelement umschlossen gehalten wird.

Das erfindungsgemäße Verstärkungselement ist nun in einem von solchen Aufhängungselementen freien Abschnitt des Rohrelements vorgesehen, also in einem Abschnitt, der nicht schon aufgrund eines Aufhängungselements, das die Durchführung beim Einbau hält und insoweit auch das Rohrelement gegenüber den dabei wirkenden Kräften teilweise stabilisiert, hinsichtlich einer Verformung weniger problematisch ist. Die Angabe "in einem von außenseitigen Aufhängungselementen freien Abschnitt" bezieht sich auf die Längsrichtung des Rohrelements; in Längsrichtung sollen das Verstärkungselement und das/die Aufhängungselement(e) beabstandet sein, etwa um in dieser Reihenfolge zunehmend bevorzugt mindestens 10 %, 20 %, 30 % bzw. 40 % der Rohrelementlänge je Verstärkungselement (sind eine Mehrzahl erfindungsgemäße Verstärkungselemente vorgesehen, ist die Rohrelementlänge also durch die Anzahl Verstärkungselemente zu teilen und bezieht sich die Prozentangabe dann auf den Bruchwert). Aufhängungs- und Verstärkungselement können beispielsweise in dieser Reihenfolge zunehmend bevorzugt mindestens 1 cm, 2 cm, 3 cm, 4 cm bzw. 5 cm voneinander entfernt sein (in Längsrichtung).

In anderen Worten meint das Beabstandetsein von Aufhängungs- und Verstärkungselement, dass sich eine senkrechte Projektion (senkrecht zur Längsrichtung) des Aufhängungselements auf die Außenmantelfläche des Rohrelements und eine ebenfalls senkrechte, umlaufende Projektion des Verstärkungselements auf dieselbe Fläche nicht berühren und idealerweise einen im vorstehenden Absatz konkretisierten Mindestabstand haben.

In Längsrichtung des Rohrelements gesehen, also in Längsrichtung in die Durchgangsöffnung des Rohrelements blickend, erstreckt sich das Verstärkungselement mittig durch die Durchgangsöffnung (bedeckt die Mitte des Querschnittsprofils der Durchgangsöffnung). Im bevorzugten Fall eines Rohrelements mit kreisförmigem Querschnittsprofil bedeckt das Verstärkungselement also den Kreismittelpunkt. Insgesamt bedeckt das Verstärkungselement in Längsrichtung gesehen mindestens 30 %, in dieser Reihenfolge zunehmend bevorzugt mindestens 40 %, 50 %, 60 %, 70 %, 80 % bzw. 90 % der Durchgangsöffnung; zumindest in gewisser Näherung nimmt mit dem Bedeckungsgrad auch die mechanische Verstärkung zu. Besonders bevorzugt ist ein Bedeckungsgrad von 100 %, ist das Verstärkungselement also als das Rohrelement hinsichtlich der Längsrichtung verschließende Trennwand ausgebildet.

Im Allgemeinen kann das Verstärkungselement indes beispielsweise auch als Steg vorgesehen sein, der die Durchgangsöffnung etwa im Falle eines Wandelements vertikal durchsetzt, sodass beispielsweise einer Verformung durch beim Vergießen vertikal auf das Rohrelement treffendes Wandmaterial vorgebeugt werden kann. Bevorzugt erfolgt auch in horizontaler Richtung eine Abstützung, etwa durch einen weiteren, den ersten Steg kreuzenden Steg oder eben besonders bevorzugt mittels einer durchgehenden Trennwand.

Das Verstärkungselement ist einstückig mit dem Rohrelement ausgebildet, was beispielsweise die Handhabung vereinfachen (es muss kein zusätzliches Teil vorgehalten und dann erst von einem Monteur an der richtigen Stelle platziert werden) und so auch Montagefehlern vorbeugen kann. "Einstückig" meint im Rahmen dieser Offenbarung gemeinsam in einem formenden Verfahren hergestellt, also indem fließfähiges Kunststoffmaterial einer (von einem Formwerkzeug) begrenzten Kavität zugeführt wird und darin zumindest teilweise aushärtet. Ein Beispiel ist die Herstellung durch Spritzguss; "einstückig" soll im Allgemeinen gleichwohl nicht zwingend eine Herstellung im selben Verfahrensschritt erfordern, Verstärkungs- und Rohrelement könnten also beispielsweise auch durch Zwei-Komponenten-Spritzguss hergestellt sein. Vorzugsweise ist für das Rohrelement und das damit einstückige Verstärkungselement gleichwohl eine einzige Form vorgesehen, werden die beiden also in einem Schritt gegossen, und zwar aus demselben Kunststoffmaterial.

Für Rohr- und Verstärkungselement kann beispielsweise ein Kunststoffmaterial mit Polycarbonat, Polyamid, Polystyrol, Polymethylmethacrylat, Polyethylenterephthalat, Polybutylenterephthalat, Acrylester-Styrol-Acrylnitril beziehungsweise Styrol-Acrylnitril als Bestandteil vorgesehen sein.

Weitere bevorzugte Ausgestaltungen der Erfindung finden sich in den abhängigen Ansprüchen und in der nachstehenden Beschreibung, wobei wie in der gesamten Offenbarung nicht im Einzelnen zwischen der Darstellung der Durchführung und Verwendungen derselben unterschieden wird; jedenfalls implizit ist die Offenbarung hinsichtlich sämtlicher Kategorien zu verstehen.

Üblicherweise wird das Verstärkungselement nach dem Einbau der Durchführung, spätestens vor dem Hindurchführen einer Leitung, aus dem Rohrelement genommen; erfindungsgemäß ist zum Abtrennen des Verstärkungselements eine Sollbruchstelle vorgesehen, also beispielsweise ein Bereich verringerter Wandstärke und/oder ein perforierter Bereich. Besonders bevorzugt ist die Sollbruchstelle zwischen einer Innenmantelfläche des Rohrelements und dem Verstärkungselement angeordnet; nach dem Abtrennen des Verstärkungselements verbleibt so ein möglichst geringer Teil des Verstärkungselements in der Durchgangsöffnung und wird dementsprechend das Hindurchführen einer Leitung zumindest kaum beeinträchtigt.

Erfindungsgemäß ist das Rohrelement aus mindestens zwei reversibel trenn- und wieder verbindbaren Rohelementteilstücken zusammensetzbar, vorzugsweise zusammengesetzt, und ist das Aufhängungselement an einem ersten und das Verstärkungselement an einem zweiten Rohrelementteilstück vorgesehen. Dies kann zum Beispiel insofern vorteilhaft sein, als das Aufhängungs- und das Verstärkungselement (also sich von dem Rohrelement weg erhebende Elemente) in unterschiedlichen Abschnitten des Rohrelements vorgesehen sind, was die Gestaltung eines Formwerkzeugs betreffend den Aufwand erhöhen kann; es wären nämlich an unterschiedlichen Stellen sich von dem Rohrelement weg erhebende Elemente zu berücksichtigen.

Die Rohrelementteilstücke sind reversibel voneinander trenn- und wieder miteinander verbindbar, werden also beispielsweise mit einer Hauptbewegungskomponente in Längsrichtung ineinander gesteckt und können etwa auch durch eine zusätzliche Drehbewegung arretiert sein, etwa im Falle entsprechend vorgesehener Formschlusselemente ("Bajonettverschluss"). Im Allgemeinen könnten die Rohrelementteilstücke beispielweise auch verschraubt sein, etwa über als komplementäre Gewinde ausgebildete Rohrelementteilstücke. Bevorzugt ist gleichwohl eine Einschiebbarkeit mit einer Hauptbewegungskomponente in Längsrichtung (ohne Schraubbewegung); "reversible Auftrennbarkeit" meint ein voneinander Lösen ohne Materialabtrag (also beispielsweise kein Zersägen). Soweit ohne weitere Angabe auf die "Rohrelementlänge" Bezug genommen wird, betrifft dies im Falle eines aus Rohrelementteilstücken zusammengesetzten Rohrelements dessen Länge im zusammengesetzten Zustand.

Erfindungsgemäß ist das am zweiten Rohrelementteilstück vorgesehene Verstärkungselement an dessen Ende vorgesehen und wird das zweite Rohrelementteilstück mit diesem Ende in das erste Rohrelementteilstück gesetzt. "An einem Ende vorgesehen" meint um in Längsrichtung nicht mehr als in dieser Reihenfolge zunehmend bevorzugt 15 %, 10 %, 5 % der (in Längsrichtung genommenen) Länge des zweiten Rohrelementteilstücks von dessen Ende entfernt; besonders bevorzugt ist das Verstärkungselement unmittelbar am Ende des zweiten Rohrelementteilstücks angeordnet, geht also eine Außenmantelfläche des zweiten Rohrelementteilstücks unmittelbar in das Verstärkungselement über (und nicht erst in eine Innenmantelfläche des Rohrelements). Das Verstärkungselement kann bei dieser Ausführungsform das zweite Rohrelementteilstück und aufgrund dessen Positionierung innerhalb des ersten Rohrelementteilstücks auch letzteres stabilisieren und so einer Verformung vorbeugen.

In bevorzugter Ausgestaltung ist für das Einsetzen des zweiten Rohrelementteilstücks in das erste ein Anschlag vorgesehen, bis zu welchem das erste Rohrelementteilstück in Leitungsrichtung eingesetzt, insbesondere eingeschoben, werden kann. Besonders bevorzugt ist der Anschlag außenseitig am zweiten Rohrelementteilstück ausgebildet, sodass das Hindurchführen einer Leitung nicht durch einen in die Durchgangsöffnung hineinragenden Vorsprung erschwert wird; der Anschlag kann also beispielsweise als außenseitig umlaufende Erhebung vorgesehen sein.

Erfindungsgemäß sind die mindestens zwei Rohrelementteilstücke jeweils für sich einstückig (und wird insoweit auf die vorstehende Begriffsklärung zur Einstückigkeit verwiesen); bevorzugt werden die Rohrelementteilstücke durch Spritzgießen hergestellt, wobei das erste Rohrelementteilstück und das Aufhängungselement bzw. das zweite Rohrelementteilstück und das Verstärkungselement weiter bevorzugt in einem Verfahrensschritt hergestellt werden. Hierbei schließt die Herstellung "in einem Schritt" das Vorhandensein weiterer Schritte selbstverständlich nicht aus, kann also beispielsweise in einem Zwei-Komponenten-Spritzgussverfahren in einem weiteren Schritt eine außenseitige Dichtung an eines der Rohrelementteilstücke, vorzugsweise an das erste (ohne Verstärkungselement), angeformt werden.

Generell, also auch unabhängig von der mehrteiligen Ausgestaltung des Rohrelements, ist ein zu beiden Enden des Rohrelements in Längsrichtung beabstandetes Verstärkungselement bevorzugt (im Falle eines Rohrelements aus mehreren Rohrelementteilstücken bezieht sich dies auf jene Enden der Rohrelementteilstücke, in die kein anderes Rohrelementteilstück gesetzt ist bzw. die in kein anderes Rohrelementteilstück gesetzt werden). Das Verstärkungselement (eine zur Leitungsrichtung senkrechte, umlaufende Projektion davon auf die Innenmantelfläche des Rohrelements) ist von den beiden Enden des Rohrelements um in dieser Reihenfolge zunehmend bevorzugt mindestens 10 %, 15 %, 20 %, 25 % bzw. 30 % der Rohrelementlänge je Verstärkungselement entfernt (im Falle einer Mehrzahl Verstärkungselemente ist die Rohrelementlänge also durch die Anzahl der Verstärkungselemente zu teilen und kann der Mindestabstand zu den Enden des Rohrelements entsprechend abnehmen).

Eine zu den Enden des Rohrelements entsprechend beabstandet angeordnetes Verstärkungselement kann beispielswiese insofern vorteilhaft sein, als in das freie Ende des Rohrelements beim Einbau der Durchführung zum Beispiel ein aus dem Rohrelement herausragender Formkörper, etwa ein Styroporteil, gesetzt werden kann. Auf diese Weise lässt sich etwa im Falle eines Rohrelements, dessen Länge kleiner als die Dicke der herzustellenden Wand ist, das Rohrelement zur Schalung hin "verlängern"; in einem an die Schalung grenzenden Abschnitt hält dann der Formkörper die Durchgangsöffnung in dem Wandmaterial frei. Ferner kann in ein solches, nicht mit einem Verstärkungselement versehenes Ende des Rohrelements beispielsweise auch ein an der Schalung vorgesehenes Halteteil eingesetzt werden, auf welchem dann ein Innenmantelflächenabschnitt des Rohrelements beim Einbau der Durchführung anliegt. An dem entgegengesetzten Ende des Rohrelements ist vorzugsweise das Aufhängungselement vorgesehen.

Ein endseitiges Aufhängungselement ist generell bevorzugt; besonders bevorzugt ist es unmittelbar an einem Ende des Rohrelements vorgesehen, beispielsweise als umlaufender Flansch. Mit einem solchen Flansch kann die Durchführung beim Einbau in das Wand- oder Bodenelement an einer Schalung befestigt werden; der Flansch kann also beispielsweise von "innerhalb" des dann herzustellenden Wand- oder Bodenelements mit der Schalung vernagelt werden. Es können auch an beiden Enden des Rohrelements als jeweils umlaufender Flansch ausgebildete Aufhängungselemente vorgesehen sein; die Durchführung könnte dann beispielsweise in einer für ein Wandelement vorgesehenen Schalung montiert werden, und zwar über die beiden Flanschelemente an einander gegenüberliegenden Schalungselementen.

Generell ist für den Einbau der Durchführung ein Vergießen mit fließfähigem Material, beispielsweise Beton oder Mörtel, welches dann erstarrt, bevorzugt; besonders bevorzugt wird mit dem Einbau der Durchführung auch das Wand- oder Bodenelement hergestellt. Im Allgemeinen könnte die Durchführung jedoch auch in eine Durchgangsöffnung in einem bereits bestehenden Wand- oder Bodenelement gesetzt und darin vergossen werden, beispielsweise auch durch ein Harz wie zum Beispiel PU-Schaum.

In bevorzugter Ausgestaltung hat das Aufhängungselement in Längsrichtung gesehen eine polygonförmige Außenkontur und ist es mit entsprechend polygonförmigen Aufhängungselementen weiterer Durchführungen sich flächig ergänzend zusammenbaubar. Bevorzugt sind hierbei Aufhängungselemente mit im Wesentlichen rechteckförmiger Außenkontur (gegebenenfalls abgesehen von zum Beispiel abgeschrägten Ecken), insbesondere quadratische Aufhängungselemente; besonders bevorzugt wird an die Seitenkante eines quadratischen Aufhängungselements jeweils genau eine Seitenkante eines quadratischen Aufhängungselements einer anderen Durchführung gesetzt.

Bei einer bevorzugten Ausführungsform weist das Aufhängungselement ein Verbindungselement auf, beispielsweise an einer Seitenkante eines polygonförmigen, besonders bevorzugt rechteckförmigen (insbesondere quadratischen), Aufhängungselements. Das Formschlusselement ist in bevorzugter Ausgestaltung doppelt als ein erstes und ein zweites Formschlusselement vorgesehen, die komplementär zueinander sind; beim Zusammensetzen zweier Durchführungen bildet das erste Formschlusselement der ersten Durchführung einen Formschluss mit dem zweiten der weiteren Durchführung (das zweite Formschlusselement der ersten Durchführung kann einen Formschluss mit dem ersten Formschlusselement einer zweiten weiteren Durchführung bilden). Die Formschlusselemente können beispielsweise Nut- und Feder-artig ineinandergreifen, und zwar mit einer Hinterschneidung, sodass zum Lösen der formschlüssigen Verbindung ein gewisser Kraftaufwand notwendig ist.

Bevorzugt ist ferner ein zusätzliches Verschlusselement, das einsetz- und wieder herausnehmbar ist und in dem Abschnitt des Rohrelements angeordnet wird, in welchem auch das Aufhängungselement vorgesehen ist. Es kann sich beispielsweise um einen Verschlussdeckel handeln, der mit einer Hauptbewegungskomponente in Längsrichtung eingeschoben und dann durch eine Drehbewegung arretiert wird (Bajonettverschluss); vorzugsweise ist dieser gemeinsam mit einem polygonförmigen (insbesondere quadratischen) Aufhängungselement endseitig des Rohrelements vorgesehen.

Wie bereits eingangs erwähnt, betrifft die Erfindung auch Verwendungen einer entsprechenden Durchführung, insbesondere zum Einbau in ein Wand- oder Bodenelement mit zunächst fließfähigem und dann erstarrendem Material, welches das Rohrelement mit dem Verstärkungselement umschließt. Das Verstärkungselement wird idealerweise nach dem Einbau der Durchführung von dem Rohrelement abgetrennt und aus der Durchgangsöffnung genommen, sodass eine Leitung hindurchgeführt werden kann.

Insbesondere betrifft die Erfindung eine Verwendung, bei welcher die Durchführung in einer Schalung montiert wird, wobei das Verstärkungselement in einem Abschnitt des Rohrelements vorgesehen ist, der selbst nicht unmittelbar mit der Schalung verbunden wird; mittelbar wird der besagte Abschnitt über die übrige Durchführung (das übrige Rohrelement) mit der Schalung verbunden. "Schalung" meint insofern nicht nur die flächigen Schalungselemente aus beispielsweise Holz oder Kunststoff, sondern auch deren Befestigung dienende Stützelemente bzw. an der Schalung befestigte bzw. innerhalb davon vorgesehene Teile, etwa auch eine Armierung.

"Aufhängungselement" bezieht sich also auf eine Befestigung der Durchführung vor dem Vergießen; eine beim Vergießen, konkret beim Aushärten des zunächst fließfähigen Materials, erst entstehende Befestigung ist damit nicht gemeint. Ein von dem erstarrten Material umschlossenes Teil der Durchführung, beispielsweise eine außenseitig am Rohrelement vorgesehene Dichtung, die vor dem Vergießen lediglich mittelbar über die Durchführung an der Schalung befestigt war, ist also beispielsweise kein Aufhängungselement.

Im Folgenden wird die Erfindung anhand von Ausführungsbeispielen näher erläutert, wobei die Merkmale auch in anderer Kombination erfindungswesentlich sein können und weiterhin nicht im Einzelnen zwischen den Erfindungskategorien unterschieden wird.
- Figur 1: zeigt eine erfindungsgemäße Durchführung mit Verstärkungselement.
- Figur 2: zeigt eine Explosionszeichnung der Durchführung gemäß Figur 1.
- Figur 3: illustriert eine Durchführung mit einem nicht als durchgehende Trennwand ausgebildeten Verstärkungselement.

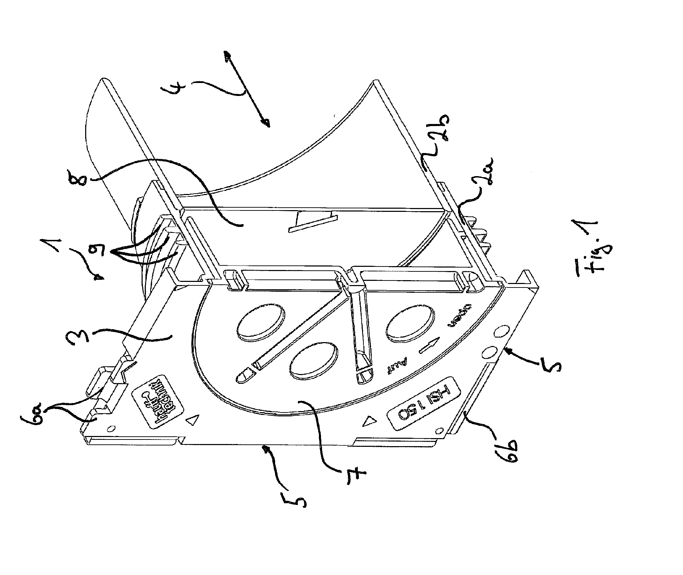

Figur 1 zeigt eine erfindungsgemäße Durchführung 1 mit einem Rohrelement 2 und einem endseitig davon vorgesehenen Aufhängungselement 3. Das Aufhängungselement 3 ist eine sich senkrecht von dem Rohrelement 2 weg erhebende Flanschplatte, die in Längsrichtung 4 des Rohrelements 2 gesehen eine quadratische Außenform hat; in dem in Figur 1 gezeigten Schnitt (die Schnittebene beinhaltet die Mittenachse des Rohrelements 2) ist entsprechend eine Hälfte des Quadrats zu erkennen.

Die Durchführung 1 ist mit weiteren Durchführungen 1 zusammenbaubar, und zwar indem eine Kante 5 des Aufhängungselements 3 der einen Durchführung 1 bündig an die Kante 5 des Aufhängungselements 3 einer anderen Durchführung 1 gesetzt wird. So lassen sich eine Vielzahl Durchführungen 1 kombinieren, beispielsweise in einer Reihe nebeneinander (x-Richtung) oder auch matrixförmig in x- und y-Richtung.

Zum Verbinden der Aufhängungselemente 3 sind an diesen Verbindungselemente 6 vorgesehen, und zwar doppelt als ein erstes Formschlusselement 6a und ein dazu komplementäres zweites Formschlusselement 6b. An der in Figur 1 linken Kante 5 und an der unteren Kante 5 sind Feder-artig ausgebildete zweite Formschlusselemente 6b vorgesehen, die beim Ansetzen einer weiteren Durchführung von unten oder von links in Nut-artigen (ersten) Formschlusselementen 6a verrasten, also mit einer gewissen Hinterschneidung darin sitzen. Die Nut-artigen Formschlusselemente 6a sind an der in Figur 1 oberen Kante 5 und an der in der Schnittdarstellung nicht gezeigten rechten Kante der Durchführung 1 vorgesehen.

Beim Einbau der Durchführung 1 in ein Wandelement wird das Aufhängungselement 3 an einer zum Gießen des Wandelements vorgesehenen Verschalung befestigt; das Aufhängungselement 3 liegt also flächig an einem Schalungselement, beispielsweise einer Holzplatte, an und wird von innerhalb der Schalung daran festgenagelt. Anschließend wird die Schalung mit Beton aufgefüllt, die Durchführung 1 also in dem so hergestellten Wandelement vergossen. Ein die von dem Rohrelement 2 freigehaltene Durchgangsöffnung verschließender Verschlussdeckel 7 kann nach dem Entfernen der Schalung aus der Durchgangsöffnung genommen und beispielsweise durch einen Systemdeckel mit einer Durchgangsöffnung für die Leitung ersetzt werden.

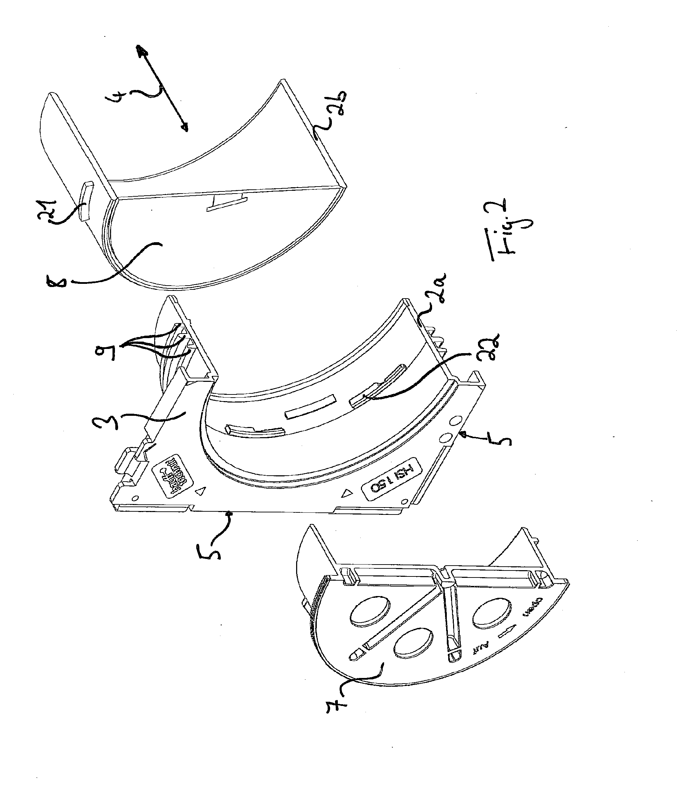

Erfindungsgemäß ist in dem Rohrelement 2 ein hier als durchgehende Trennwand ausgebildetes Verstärkungselement 8 vorgesehen, und zwar in einem von Aufhängungselementen 3 freien Abschnitt des Rohrelements 2. Das Verstärkungselement 8 ist einstückig mit dem zweiten Rohrelementteilstück 2b ausgebildet und endseitig davon vorgesehen, vergleiche die Explosionszeichnung in Figur 2.

Das Verstärkungselement 8 ist bezogen auf die Längsrichtung 4 in einem Abschnitt des Rohrelements 2 angeordnet, in dem kein Aufhängungselement 3 vorgesehen ist; in diesem Abschnitt ist das Rohrelement 2 also vor bzw. während des Vergießens nicht an der Schalung befestigt oder mit dem Rohrelement 2 einer anderen Durchführung 1 verbunden. In diesem Abschnitt ist deshalb das Verstärkungselement 8 vorgesehen, um das Rohrelement 2 beim Vergießen von innen zu stützen, und um so einer Verformung durch den vom noch nicht erstarrten Beton verursachten Druck vorzubeugen.

Indem das Verstärkungselement 8 einer Verformung des Rohrelements 2 vorbeugt, kann eine außenseitig des Rohrelements 2 vorgesehene, von dem erstarrten Wandmaterial umschlossene Stegdichtung 9 das Rohrelement 2 sicher zu dem Wandelement hin dichten kann.

Um das Heraustrennen des Verstärkungselements 8 zu erleichtern, ist außenseitig umlaufend, zwischen Verstärkungselement 8 und der Innenmantelfläche des Rohrelements 2 eine Sollbruchstelle vorgesehen; die Wandstärke des Verstärkungselements 8 ist also in einem Grenzbereich zum Rohrelement 2 hin umlaufend etwas verringert. Das Verstärkungselement 8 kann beispielsweise mit einem Hammer ausgeschlagen bzw. mit dem Stiel des Hammers ausgestoßen werden.

Insbesondere in der Explosionszeichnung gemäß Figur 2 ist der zweistückige Aufbau des Rohrelements 2 zu erkennen; das zweite Rohrelementteilstück 2b ist in das erste Rohrelementteilstück 2a eingeschoben, und zwar bis zu einem Anschlag 21. Der Anschlag 21 ist als sich außenseitig vom zweiten Rohrelementteilstück 2b weg erhebender Vorsprung vorgesehen, ragt also nicht in die Durchgangsöffnung hinein und beeinträchtigt insofern nicht das Hindurchführen der Leitung.

In der Explosionszeichnung gemäß Figur 2 sind ferner innenseitig am ersten Rohrelementteilstück 2a vorgesehene Vorsprünge 22 zu erkennen, mit welchen der Verschlussdeckel 7 nach einem Einschieben in Längsrichtung 4 durch eine Drehbewegung verrastet werden kann (Bajonettverschluss).

Indem das Verstärkungselement 8 als durchgehende Trennwand ausgebildet ist, ist es hinreichend stabil und kann es trotz der zwischen Verstärkungselement 8 und Rohrelement 2 vorgesehenen Sollbruchstelle einer Deformation des Rohrelements 2 vorbeugen; das als Trennwand ausgebildete Verstärkungselement 8 ist nämlich vergleichsweise steif.

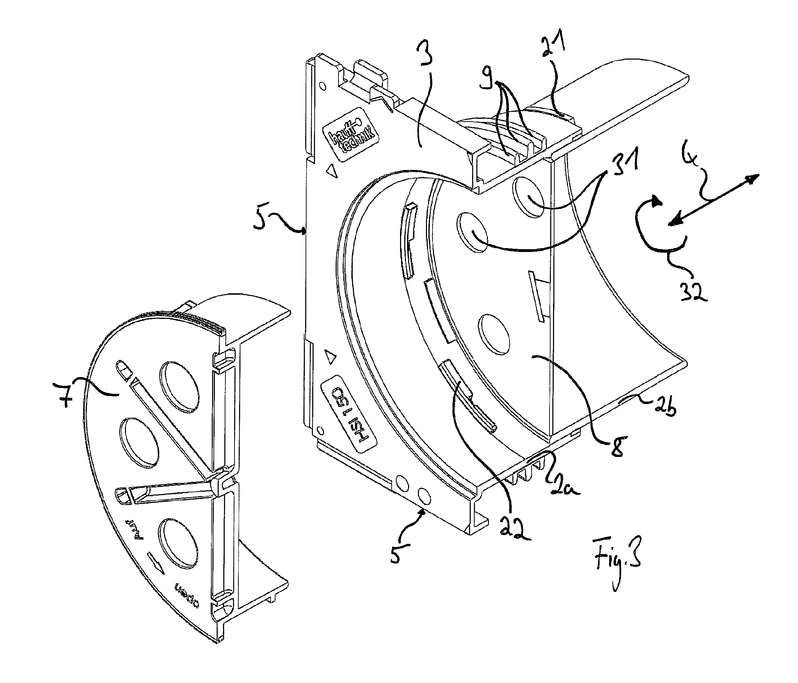

Bei der Ausführungsform gemäß Figur 3 ist das Verstärkungselement 8 hingegen nicht als durchgehende Trennwand ausgebildet, sondern sind darin mehrere Durchgangsöffnungen 31 vorgesehen, und zwar in Umlaufrichtung 32 äquidistant aufeinander folgend. Gleichwohl bedeckt das Verstärkungselement 8 in Längsrichtung 4 gesehen einen mittigen Bereich des Querschnittsprofils der von dem Rohrelement 2a, b begrenzten Durchgangsöffnung, was eine gute mechanische Verstärkung beim Vergießen der Durchführung 1 in einem Wandelement gewährleistet.

## Patentansprüche

1. Durchführung (1) zum Einbau in ein Wand- oder Bodenelement, mit einem Rohrelement (2) aus einem Kunststoffmaterial, durch welches eine Leitung hindurchführbar ist und an dem außenseitig ein sich von dem Rohrelement weg erhebendes Aufhängungselement (3) zur Befestigung der Durchführung (1) während des Einbaus in das Wand- oder Bodenelement vorgesehen ist,
wobei in dem Rohrelement (2) ein einstückig damit ausgebildetes, sich von einer Innenmantelfläche des Rohrelements (2) weg erhebendes Verstärkungselement (8), das sich in Längsrichtung (4) des Rohrelements (2) gesehen durch die Mitte des Querschnittsprofils der Durchgangsöffnung erstreckt und mindestens 30 % davon bedeckt, vorgesehen ist, und zwar in einem von außenseitigen Aufhängungselementen (3) freien Abschnitt des Rohrelements (2),
bei welcher Durchführung (1) das Rohrelement (2) aus mindestens zwei reversibel trenn- und verbindbaren Rohrelementteilstücken (2a, b) zusammengesetzt oder zusammenzusetzen ist, welche Rohrelementteilstücke (2a, b) jeweils für sich einstückig sind, wobei das Aufhängungselement (3) an einem ersten Rohrelementteilstück (2a) und das Verstärkungselement (8) an einem zweiten Rohrelementteilstück (2b) vorgesehen ist,
wobei das Verstärkungselement (8) an einem Ende des zweiten Rohrelementteilstücks (2b) vorgesehen und das zweite Rohrelementteilstück (2b) mit diesem Ende in das erste Rohrelementteilstück (2a) eingesetzt oder einzusetzen ist
**dadurch gekennzeichnet, dass**
für ein Abtrennen des Verstärkungselements (8) eine Sollbruchstelle vorgesehen ist.

2. Durchführung (1) nach Anspruch 1, bei welcher das Verstärkungselement (8) als eine das Rohrelement (2) hinsichtlich seiner Längsrichtung (4) verschließende Trennwand vorgesehen ist.

3. Durchführung (1) nach Anspruch 1 oder 2, bei der die für das Abtrennen des Verstärkungselements (8) vorgesehene Sollbruchstellezwischen einer Innenmantelfläche des Rohrelements (2) und dem Verstärkungselement (8) vorgesehen ist.

4. Durchführung (1) nach einem der vorstehenden Ansprüche, bei welcher das zweite Rohrelementteilstück (2b) in das erste Rohrelementteilstück (2a) eingesetzt ist oder werden kann, und zwar bis zu einem Anschlag (21), vorzugsweise bis zu einem außenseitig am zweiten Rohrelementteilstück vorgesehenen Anschlag (21).

5. Durchführung (1) nach einem der vorstehenden Ansprüche, bei welcher die mindestens zwei Rohrelementteilstücke (2a, b) jeweils für sich durch Spritzgießen hergestellt sind.

6. Durchführung (1) nach einem der vorstehenden Ansprüche, bei welcher das Verstärkungselement (8) zu den Enden des Rohrelements (2) in Längsrichtung (4) beabstandet ist.

7. Durchführung (1) nach einem der vorstehenden Ansprüche, bei welcher das Aufhängungselement (3) an einem Ende des Rohrelements (2) vorgesehen und vorzugsweise als umlaufender Flansch ausgebildet ist.

8. Durchführung (1) nach einem der vorstehenden Ansprüche, bei welcher das Aufhängungselement (3) in Längsrichtung (4) gesehen eine polygonförmige Außenkontur hat und mit entsprechend polygonförmigen Aufhängungselementen (3) weiterer Durchführungen (1) sich flächig ergänzend zusammenbaubar ist.

9. Durchführung (1) nach einem der vorstehenden Ansprüche, bei welcher das Aufhängungselement (3) ein Verbindungselement (6a, b) aufweist, über welches die Durchführung (1) mit einer weiteren Durchführung (1) verbindbar ist und das doppelt als ein erstes Formschlusselement (6a) und ein zweites Formschlusselement (6b) vorgesehen ist, welche Formschlusselemente (6a, b) solchermaßen komplementär ausgelegt sind, dass das erste Formschlusselement (6a) einen Formschluss mit dem zweiten Formschlusselement (6b) der weiteren Durchführung (1) bilden kann.

10. Durchführung (1) nach einem der vorstehenden Ansprüche mit einem einsetz- und wieder herausnehmbaren zusätzlichen Verschlusselement (7), das in dem Abschnitt des Rohrelements (2) vorgesehen ist, in welchem das Aufhängungselement (3) angeordnet ist.

11. Verwendung einer Durchführung (1) nach einem der vorstehenden Ansprüche zum Einbau in ein Wand- oder Bodenelement, wobei fließfähiges Material, vorzugsweise Beton oder Mörtel, welches dann erstarrt, das Rohrelement (2) mit dem darin vorgesehenen Verstärkungselement (8) umschließt.

12. Verwendung nach Anspruch 11 einer Durchführung (1) nach einem der vorstehenden Ansprüche, wobei ein Befestigungselement in ein offenes Ende der Durchführung (1) gesetzt wird, welches Befestigungselement die Durchführung (1) gegenüber einer Schalung lagefixiert.

13. Verwendung nach Anspruch 11 oder 12, wobei das Verstärkungselement (8) nach dem Einbau der Durchführung (1) in das Wand- oder Bodenelement abgetrennt und aus dem Rohrelement (2) genommen wird.

## Claims

1. A duct (1) for an insertion into a wall or floor element, having a tube element (2) made of a synthetic material, wherein a line can be fed through said tube element and wherein a mounting element (3) for mounting said duct (1) during said insertion into said wall or floor element is provided at the outside of said tube element, said mounting element projecting from said tube element,
wherein a support element (8) being one-piece with said tube element (2) is provided in said tube element (2) and projects from an inner lateral surface of said tube element (2), said support element extending, seen in a length direction (4) of said tube element (2), through the center of the cross-sectional profile of the through opening and covering at least 30 % of the latter, wherein said support element is provided in a section of said tube element (2), which is free of mounting elements (3) on its outside,
said tube element (2) of said duct (1) being assembled or assemblable of at least two tube element pieces (2a, b) which are reversibly separable and connectable, said tube element pieces (2a, b) being one-piece respectively, wherein said mounting element (3) is provided at a first tube element piece (2a) and said support element (8) is provided at a second tube element piece (2b),
wherein said support element (8) is provided at an end of said second tube element piece (2b) and said second tube element (2b) is inserted or insertable with said end into said first tube element piece (2a) **characterized in that**
a predetermined breaking point is provided for a separation of said support element (8).

2. The duct (1) according to claim 1 wherein said support element (8) is a separation wall closing said tube element (2) with respect to its length direction (4).

3. The duct (1) according to claim 1 or 2, wherein said predetermined breaking point for said separation of said support element (8) is provided between said inner lateral surface of said tube element (2) and said support element (8).

4. The duct (1) according to one of the preceding claims, wherein said second tube element piece (2b) is inserted or can be inserted into said first tube element piece (2a), namely up to a stop (21), preferably up to a stop (21) provided at the outside of said second tube element piece.

5. The duct (1) according to one of the preceding claims, wherein said at least two tube element pieces (2a, b) are manufactured by injection molding respectively.

6. The duct (1) according to one of the preceding claims, wherein said support element (8) is spaced to the ends of said tube element (2) with respect to said length direction (4).

7. The duct (1) according to one of the preceding claims, wherein said mounting element (3) is provided at an end of said tube element (2), preferably as a circumferential flange.

8. The duct (1) according to one of the preceding claims, wherein said mounting element (3) has, seen in said length direction (4), a polygonal outer contour and can be assembled with mounting elements (3) being correspondingly polygonal and belonging to further ducts (1) in a manner complementing each other to an area.

9. The duct (1) according to one of the preceding claims, wherein said mounting element (3) comprises a connecting element (6a, b), said duct (1) being connectable to a further duct (1) by said connecting element (6a, b), said connecting element being provided doubly as a first form fit element (6a) and a second form fit element (6b), said form fit elements (6a, b) being complementary to each other in such a way that said first form fit element (6a) can constitute a form fit with said second form fit element (6b) of said further duct (1).

10. The duct (1) according to one of the preceding claims, having an insertable and removable additional closure element (7) provided in said section of said tube element (2), in which said mounting element (3) is provided.

11. A use of a duct (1) according to one of the preceding claims for an insertion into a wall or floor element, wherein a pourable material, preferably concrete or mortar, said pourable material hardening then, encloses said tube element (2), wherein said support element (8) is provided in said tube element.

12. The use according to claim 11 of a duct (1) according to one of the preceding claims, wherein a securing element is inserted into an open end of said duct (1), said securing element holding said duct (1) in position with respect to a formwork.

13. The use according to claim 11 or 12, wherein said support element (8) is separated and removed from said tube element (2) after said insertion of said duct (1) into said wall or floor element.

## Revendications

1. Passage (1) à encastrer dans un élément de paroi ou de sol, comportant un élément de tuyau (2), réalisé en matière plastique, dans lequel peut être introduite une conduite et sur l'extérieur duquel est prévu un élément d'accrochage (3) qui part de l'élément de tuyau et qui sert à fixer le passage (1) lors de son encastrement dans l'élément de paroi ou de sol,
dans lequel il est prévu un élément de renfort (8) dans l'élément de tuyau (2), ceux-ci étant conçus d'un seul tenant, l'élément de renfort partant d'une paroi intérieure de l'élément de tuyau (2), l'élément de renfort (8) se prolongeant, vu dans le sens longitudinal (4) de l'élément de tuyau (2), par le centre du profil de section de l'ouverture de passage en en couvrant au moins 30 %, ledit élément de renfort étant prévu dans une section de l'élément de tuyau (2) qui est dépourvue desdits éléments d'accrochage (3) extérieurs,
dans lequel l'élément de tuyau (2) se compose ou est à composer à partir d'au moins deux composantes d'élément de tuyau (2a, b) réversibles et susceptibles d'être assemblées et séparées, lesquelles composantes d'élément de tuyau (2a, b) représentent chacune une pièce unitaire, l'élément d'accrochage (3) étant prévu sur une première composante d'élément de tuyau (2a) et l'élément de renfort (8) étant prévu sur une seconde composante d'élément de tuyau (2b),
dans lequel l'élément de renfort (8) est prévu sur une extrémité de la seconde composante d'élément de tuyau (2b) et la deuxième composante d'élément de tuyau (2b) est introduite ou est à introduire par cette extrémité dans la première composante d'élément de tuyau (2a),
**caractérisé en ce que**
il est prévu un point de rupture prédéterminé destiné au détachement de l'élément de renfort (8).

2. Passage (1) selon la revendication 1, dans lequel l'élément de renfort (8) est prévu sous la forme d'une paroi de séparation qui obture l'élément de tuyau (2) par rapport à son sens longitudinal (4).

3. Passage (1) selon la revendication 1 ou 2, dans lequel le point de rupture prédéterminé destiné au détachement de l'élément de renfort (8) est prévu entre une paroi intérieure de l'élément de tuyau (2) et l'élément de renfort (8).

4. Passage (1) selon l'une des revendications précédentes, dans lequel la seconde composante d'élément de tuyau (2b) est insérée ou peut être insérée dans la première composante d'élément de tuyau (2a) et ce, jusqu'à une butée (21), de préférence jusqu'à une butée (21) prévue sur l'extérieur de la seconde composante d'élément de tuyau.

5. Passage (1) selon l'une des revendications précédentes, dans lequel les au moins deux composantes d'élément de tuyau (2a, b) représentent chacune une pièce unitaire et sont de préférence réalisées par moulage par injection.

6. Passage (1) selon l'une des revendications précédentes, dans lequel l'élément de renfort (8) est écarté des extrémités de l'élément de tuyau (2) dans le sens longitudinal (4).

7. Passage (1) selon l'une des revendications précédentes, dans lequel l'élément d'accrochage (3) est prévu sur une extrémité de l'élément de tuyau (2) en étant de préférence conçu sous la forme d'une bride périphérique.

8. Passage (1) selon l'une des revendications précédentes, dans lequel l'élément d'accrochage (3) présente, vu dans le sens longitudinal (4), un contour extérieur polygonal et peut s'assembler de manière complémentaire en surface avec des éléments d'accrochage (3) polygonaux correspondants appartenant à d'autres passages (1).

9. Passage (1) selon l'une des revendications précédentes, dans lequel l'élément d'accrochage (3) présente un élément de liaison (6a, b) qui permet de raccorder le passage (1) à un autre passage (1) et qui est prévu doublement sous la forme d'un premier élément à complémentarité de forme (6a) et d'un deuxième élément à complémentarité de forme (6b), lesdits éléments à complémentarité de forme (6a, b) étant conçus pour se compléter de telle manière que le premier élément à complémentarité de forme (6a) s'engage avec le deuxième élément à complémentarité de forme (6b) de l'autre passage (1).

10. Passage (1) selon l'une des revendications précédentes, comportant un élément de fermeture (7) supplémentaire qui peut être mis en place et retiré, au niveau de la section de l'élément de tuyau dans laquelle est agencé l'élément d'accrochage (3).

11. Utilisation d'un passage (1) selon l'une des revendications précédentes, destiné à être encastré dans un élément de paroi ou de sol, moyennant quoi une matière coulable, de préférence du béton ou du mortier, sous l'effet de la prise, vient entourer l'élément de tuyau (2) pourvu, en son intérieur, de l'élément de renfort (8).

12. Utilisation selon la revendication 11 d'un passage (1) selon l'une des revendications précédentes, dans laquelle un élément de fixation est placé dans une extrémité ouverte du passage (1), lequel élément de fixation fixe en place le passage (1) vis-à-vis d'un coffrage.

13. Utilisation selon la revendication 11 ou 12, dans laquelle, après l'encastrement du passage (1) dans l'élément de paroi ou de sol, l'élément de renfort (8) est détaché et retiré de l'élément de tuyau (2).
